# EUROPEAN PATENT APPLICATION

(11) **EP 0 647 720 A1**
(43) Date of publication of application: **12.04.1995**
(21) Application number: 94115653.1
(22) Date of filing: 04.10.1994
(51) Int. Cl.: C21D 1/09, B23K 26/06, H01S 3/00

(54) **Method and device for selectively and ecologically colouring metal surfaces**

(30) Priority: 12.10.1993 IT MI932157
(71) Applicant: LASERVALL S.p.A., I-10020 Donnas, Aosta (IT)
(72) Inventor: Fontana, Flavio, I-20032 Cormano (Milano) (IT)
(74) Representative: Luksch, Giorgio, Dr.-Ing.

(57) **Abstract**

A method for colouring a metal surface (12), in particular of stainless steel, comprises subjecting the surface (12) to the action of a laser beam (L) of determined frequency and power for a predetermined time, this action resulting in the presence of a suitable laser energy or power density on that region of the metal surface (12) exposed to the laser beam (L) such as to create a consequent coloration of said region. The method is implemented by a device comprising a laser beam generator (1), means (3) for focusing the emitted laser beam (L) onto a metal surface (12), and means (17; 23, 24) for varying the energy density released by said laser beam at said surface so as to achieve different colorations thereof.

## Description

This invention relates to a method for colouring a metal surface, in particular of stainless steel. The invention also relates to a device for implementing the method.

As is well known, metal surfaces are still coloured by the use of suitable paints or galvanic techniques.

Although these methods enable any desired coloration to be obtained for said surfaces, they have various drawbacks. For example, the use of paints involves a lengthy time in achieving the desired coloration. In addition this method results in considerable environmental pollution connected with the disposal of chemical waste generated during painting, and of effluents.

The use of galvanic techniques mainly does not allow selective coloration to be easily and economically achieved for small-area regions. If necessary, coatings have to be used for those parts which are not to be treated, this involving the same problems as stated in the case of painting.

An object of the present invention is to provide a method allowing considerable flexibility in achieving metal surface coloration which has no negative impact on the environment, which does not involve lengthy time for its implementation, and which can be implemented in a completely automatic manner, resulting in extremely low implementation cost.

A further object is to provide a device for implementing the aforesaid method which enables selective coloration even of small-area surfaces to be achieved, and is of low constructional and operating costs.

A further object is to provide a device of the aforesaid type which is of reliable use, which can be operated automatically and which enables any negative environmental impact to be prevented.

These and further objects which will be apparent to the expert of the art are attained by a method in accordance with the relative accompanying claims.

Said objects are attained by a device of the said type in accordance with the relative accompanying claims.

The present invention will be more apparent from the accompanying drawing, which is provided by way of non-limiting example and in which:
Figure 1 is a schematic representation of a device according to the invention;
Figure 2 is a schematic representation of part of the device according to the invention.

With reference to said figures, the device according to the invention comprises a laser beam generator 1, preferably a solid state giant pulse (or Q-switched) laser, powered by a usual electrical power unit 2 and feeding a laser beam L towards a known deviator 3 arranged to feed in known manner the coherent light beam emitted by the generator 1 along two mutually perpendicular directions X'-Y'.

The operation of the generator 1 is controlled by an operating and control unit 5, for example a microprocessor unit, which is also connected to the power unit 2, to the deviator 3, to a usual radio frequency modulating unit 8 for modulating the generator "firing" frequency, and to a member 9 which cooperates with a drive element 10 to enable the divergence of the output laser beam to be modified by a usual optical unit 11 associated with the generator 1. The laser beam L is hence fed onto a metal surface 12 on which, according to the method of the invention, it induces a particular coloration depending on the energy or power density at a focal spot 13 generated by the laser beam L on the surface 12.

The metal surface (for example of stainless steel) is preferably associated with a workpiece support table 15 movable along three spatial directions X, Y and Z. This is achieved in any known manner, for example by actuators (electric motors) 16 for moving it along the X and Y axes (parallel to X' and Y') and by a hydraulic and/or pneumatic actuator 17 for moving it along the Z axis. The operation of these actuators is controlled by the unit 3, which hence determines any movement of the metal surface 12 on the basis of the operating parameters of the generator 1 and of the deviator 3 (ie firing frequency, laser beam power, waiting cycles and scanning velocity along the X'-Y' or X-Y axes) and on the basis of the particular colour to be obtained on the surface 12.

Advantageously, the unit 5 is controlled and operated by an operator via an electronic processor 20 and its interface 21. In this manner the action of the laser beam on the surface 12 can be initially simulated by means of the processor 20, and then having obtained the desired theoretical results the said surface can be definitively coloured.

As stated, the device of the invention comprises an optical unit (or telescope) 11 by which aberration of the divergence of the output laser beam L from the deviator 3 can be achieved.

Specifically, the optical unit is of variable focal length type able to assume different focal lengths according to requirements. The result is that based on this focal length variation there is also a variation in the size of the focal spot 13 on the surface 12 (maintained fixed along the Z axis) and hence a variation in the laser energy or power density on the surface 12.

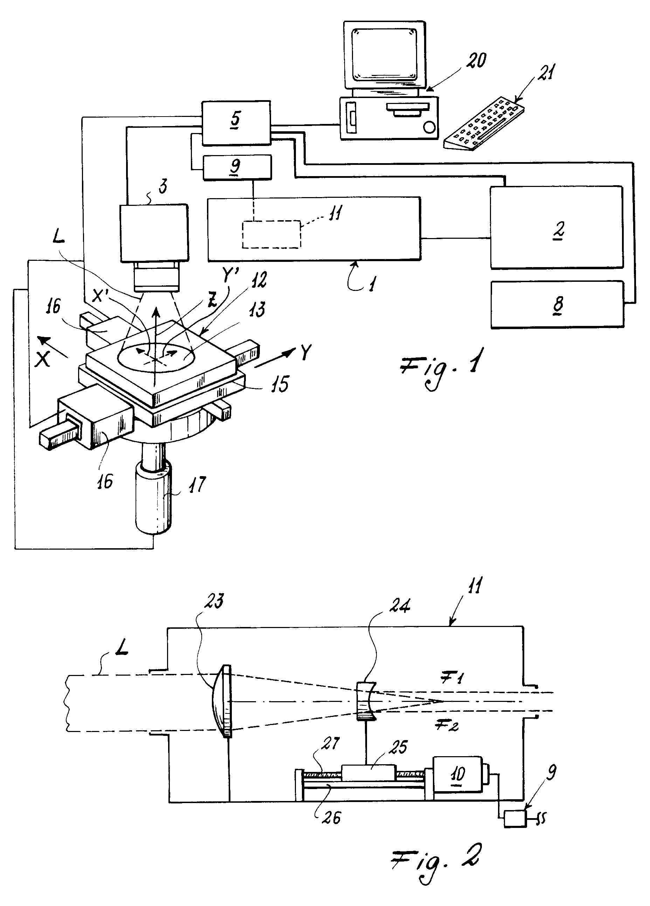

By way of example and with reference to Figure 2, the telescope 11 comprises a fixed first lens 23 and a movable second lens 24. This latter is associated with a slide 25 which is movable preferably along a fixed guide 26 under the action of a worm 27 driven by the drive element 10, for example a stepping motor. Moving the lens 24 (with its focus at the point F2) relative to the lens 23 (with its focus at F1) shifts these foci out of or into coincidence, resulting in aberration or non-aberration of the divergence of the output laser beam 12. This makes it possible to form focal spots 13 of the required dimensions and consequently of properly determined power density on the metal surface 12.

The implementation of the method according to the invention is clear from the aforegoing.

In this respect, it will be assumed that the surface 12 is to be coloured. To achieve this, the unit 5, possibly operated via the processor 24, controls the laser beam emission towards the surface 12 by the generator 1.

It has been surprisingly found that if a metal surface 12 is subjected in sequence to two successive scans by focal spots (which can follow identical or different paths along the X' and Y' axes) generated by a laser beam, this surface assumes permanent colorations in which the colour is a function in particular of the laser parameters (ie "firing" frequency, power, waiting cycles between one "firing" and the next), the velocity with which each scan is effected, and the power density present on the surface 12 at the focal spot. Consequently, according to the method of the invention, the laser beam L is fed onto the metal surface so as to generate the focal spot 13 thereon. This latter, assuming said surface to be fixed along the X, Y and Z axes, is directed towards the deviator 3 along the X' and Y' axes (parallel to X and Y) so as to effect a first scan on the metal. Then after a very short time a a second scan is effected, for example along a path identical to that of the first. This causes the metal to assume particular colorations depending on the aforesaid parameters.

By way of example, the ensuing data relate to blue coloration and to red coloration of the surface 12.

### EXAMPLE 1

By means of the processor 20 a surface of defined area, for example 10 x 10 mm, is firstly formed graphically filled with horizontal lines (which define the scanning for the spot 13) using a laser of type FRANCE LASER MOD. FLI 70 SC with a 300 mm focal length lens.

A first scan is effected on the metal using the following laser parameters:

| | |
|---|---|
| - scanning velocity: | 75 mm/second |
| - firing frequency: | 2500 Hz |
| - power: | 70 watts |
| - feed current intensity: | 15.3 Amps |

A second scan is then effected without moving the surface 12 using the following laser parameters:

| | |
|---|---|
| - scanning velocity: | 75 mm/second |
| - firing frequency: | 2500 Hz |
| - power: | 70 watts |
| - feed current intensity: | 15.3 Amps |

and with a telescope elongation (change in the distance between the lens 23 and the lens 24) of 3 mm.

By means of these successive operations the metal surface assumes a blue coloration.

### EXAMPLE 2

By means of the processor 20 a surface of defined area, for example 10 x 10 mm, is firstly formed graphically filled with horizontal lines (which define the scanning for the spot 13) using a laser of type FRANCE LASER MOD. FLI 70 SC with a 300 mm focal length lens.

A first scan is effected on the metal using the following laser parameters:

| | |
|---|---|
| - scanning velocity: | 75 mm/second |
| - firing frequency: | 2500 Hz |
| - power: | 70 watts |
| - feed current intensity: | 15.3 Amps |

A second scan is then effected without moving the surface 12 using the following laser parameters:

| | |
|---|---|
| - scanning velocity: | 75 mm/second |
| - firing frequency: | 2500 Hz |
| - power: | 70 watts |
| - feed current intensity: | 15.3 Amps |

and with a telescope elongation (change in the distance between the lens 23 and the lens 24) of 4-4.5 mm.

By means of these successive operations the metal surface assumes a red coloration.

In both these examples it will be noted that varying the focal length of the telescope 11 varies the coloration of the surface 12. This is because, as stated, varying the focal length results in a change in the focal spot dimensions and hence in the power density of the laser beam L on the surface 12.

As an alternative to the aforedescribed examples, the power density variation can be achieved, for equal laser parameters and maintaining the focal length of the telescope 11 unaltered, by changing the distance of the surface 12 from the deviator 3 by moving it along the Z axis under the control of the unit 5 on the basis of the required surface coloration, set for example via the processor 24.

As an alternative to the aforegoing, by maintaining the focal length of the telescope 11 and the distance of the surface 12 from the deviator 3 fixed, a different surface coloration can be achieved either by effecting more than two scans on the same surface with the same laser parameters, focal length and distance between the surface and deviator, or by modifying the laser parameters and in particular modifying the power of the laser beam L by action of the unit 5 on the power unit 2 or on the modulating unit 8.

In all these cases, the unit 5 (suitably and preferably guided by an operator via the processor 20 and interface 21) guides the generation of the laser beam L and its action on the surface 12 until this latter, either in its entirety or only in some of its parts, assumes the desired coloration.

Alternatively, the unit 5, which as stated can contain a usual microprocessor circuit, can be programmed to effect predetermined colorations of a metal surface subjected to interaction with a laser beam L.

A device has been described in which the deviator 3 enables the laser beam L to scan the surface 12 along X' and Y' axes. Alternatively, this scanning can be achieved by maintaining the output laser beam from the telescope fixed and moving the surface 12 along the X and Y axes by the actuators 16.

A description has been given of some methods of implementing the invention which can also be used in mutual combination. Other embodiments of the device according to the invention (and consequent implementations of the corresponding method) are possible in the light of the present document. These further embodiments are hence to be considered as falling within the scope of the present invention.

The method of the invention is implemented without the use of paints and has therefore no impact on the environment. The method enables a metal surface to be coloured selectively without any restriction on the shape and dimensions of the coloured region obtained on said surface. Finally, the method and its implementing device are of lower constructional and operating costs than already known analogous methods and devices.

## Claims

1. A method for colouring a metal surface, in particular of stainless steel, comprising subjecting the surface to the action of a laser beam (L) of determined frequency and power for a predetermined time, to define a focal spot (13) on said surface, which is positioned at a predetermined distance from a laser beam generator (1), this action resulting in the presence of a suitable laser energy or power density at the focal spot (13) on that region of the metal surface (12) exposed to the laser beam (L) such as to create a consequent coloration of said region.

2. A method as claimed in claim 1, characterised by comprising at least two successive scans by the laser beam (L) through one and the same point of the surface to be coloured.

3. A method as claimed in claim 2, characterised in that between successive scans by the laser beam (L) on the surface the distance of the surface to be coloured from the source (3) of the laser beam (L) is changed, this change modifying the power density at the focal spot (13).

4. A method as claimed in claim 2, characterised in that between successive scans the focal length of the laser beam generator (1) is changed, this change modifying the power density at the focal spot (13).

5. A method as claimed in claim 2, characterised in that between successive scans at least one operating parameter of the laser beam generator (1) is changed, this change modifying the power density at the focal spot (13).

6. A device for colouring a metal surface, in particular stainless steel, in accordance with the method claimed in claim 1, characterised by comprising a laser beam generator (1), focusing means (3) for focusing the laser beam (L) onto the metal surface, and variation means (17; 23, 24) for varying the energy or power density released by said laser beam at a focal spot (13) on the surface (12).

7. A device as claimed in claim 6, characterised in that the variation means are an actuator (17) arranged to move the metal surface away from and towards the source of the laser beam (L).

8. A device as claimed in claim 6, characterised in that the variation means are an optical unit (11) of the variable focal length type.

9. A device as claimed in claim 8, characterised in that the optical unit (11) of variable focal length comprises at least two lenses (23, 24) movable relative to each other and actuator means (10, 25, 26, 27) enabling at least one lens (24) to be moved relative to the other.

10. A device as claimed in claim 9, characterised in that the actuator means comprise an electric motor, preferably of stepping type (10), acting on a worm (27) on which there slides a slide (25) with which a movable lens (24) is associated.

11. A device as claimed in claim 6, characterised in that the focusing means are a laser beam deviator (3).

12. A device as claimed in claim 6, characterised by comprising a control and operating unit (5) connected to the laser beam generator (1), to the focusing means (3) and to the variation means (17, 23, 24), said unit, preferably of microprocessor type, controlling the operation of the elements connected to it.

13. A device as claimed in claim 12, characterised in that the control and operating unit (5) can be connected to a usual electronic processor (20, 21).

14. A device as claimed in claim 6, characterised by comprising actuator means (16) arranged to move the metal surface along two mutually perpendicular coplanar directions (X, Y).
